# EUROPEAN PATENT SPECIFICATION

(11) **EP 2 993 945 B1**
(45) Date of publication and mention of the grant of the patent: **18.07.2018**
(21) Application number: 14306452.5
(22) Date of filing: 22.09.2014
(51) Int. Cl.: H04W 52/02

(54) **A TRANSCEIVER, NETWORK NODE, METHOD AND COMPUTER PROGRAM**
Sendeempfänger, Netzwerkknoten, Verfahren und Computerprogramm
Émetteur-récepteur, noeud de réseau, procédé et programme informatique

(30) Priority: 04.09.2014 EP 14306360
(43) Date of publication of application: 09.03.2016
(73) Proprietor: Alcatel Lucent, 91620 Nozay (FR)
(72) Inventor: Kucera, Stepan, DUBLIN, 15 (IE); Venkateswaran, Vijay, Dublin, 15 (IE); Lopez-Perez, David, DUBLIN, 15 (IE)
(74) Representative: Sarup, David Alexander

(56) References cited:
- EP-A1- 2 355 594
- EP-A1- 2 416 608
- WO-A1-2010/151186
- WO-A1-2014/101958
- ASHRAF I ET AL: "Power savings in small cell deployments via sleep mode techniques", 2010 IEEE 21ST INTERNATIONAL SYMPOSIUM ON PERSONAL, INDOOR AND MOBILE RADIO COMMUNICATIONS WORKSHOPS (PIMRC WORKSHOPS); 26-30 SEPT. 2010; INSTANBUL, TURKEY, IEEE, PISCATAWAY, NJ, USA, 26 September 2010 (2010-09-26), pages 307-311, XP031837067, ISBN: 978-1-4244-9117-9

## Description

### FIELD OF THE INVENTION

The field of the invention relates to a transceiver for controlling a network node, a network node, method and computer program.

### BACKGROUND

As more small-cell base stations are added to heterogeneous networks (HetNets) to provide additional resource within a small area, typically tens of metres, the costs associated with providing such cells also increases. These costs include the hardware costs associated with the actual devices and the power costs associated with each base station or network node transmitting signals and processing data. Furthermore, with the increasing number of small cells the chances of having a small cell not currently serving any active user equipment increases significantly. In such a case it would be advantageous if the cell could switch to a sleep or inactive mode to save energy. Such on/off cell functionality is discussed for example, in the 3GPP standardisation in LTE Release 12 [RP-132073, "Small Cell Enhancements - Physical-layer Aspects", and 3GPP TR36.872v12.1.0, "Small Cell Enhancements for E-UTRA and E-UTRAN - Physical Layer Aspects (Release 12)].

There are however, two major problems associated with such a sleep mode capability. Firstly, the acquisition signals and cell-specific broadcast channels of a cell are transmitted periodically, to enable nearby user equipment to determine the cell coverage and thereby enable them to select a suitable cell to connect to. If these signals are to be transmitted during these sleep modes then the digital transceivers, RF chains and power amplifiers will need to be kept on, which results in little energy saving in the sleep mode. Secondly, if the small cell is to be available to user equipment when it is nearby then it needs to detect and respond to connection requests from the user equipment. If the receiving and decoding circuitry within the network node is inactive the connection request will not be detected.

It would be advantageous to be able to save energy by allowing network nodes to enter sleep mode while still enabling user equipment to connect to them when required.

EP13290192.7 filed by Alcatel Lucent on 16 August 2013 addresses this problem by allowing energy sustaining small cells to enter a low power mode and be woken up in response to a wake up control signal issued by a user equipment or other network node. The wake up is controlled by a low power transceiver associated with the sleeping cell which detects wake up control signals transmitted from a user equipment or network node. A drawback of this is that the transceiver needs to be able to decode the signal in order to determine that the signal is meant for it, and in the case of the user equipment transmitting the signal the user equipment needs to be configured to do so and as such, legacy user equipment would need to be updated.

WO2010/151186 discloses a system which allows a base station to enter a sleep mode, where there are no UEs in the vicinity and provides methods to wake the base station up when there is a UE nearby. The system comprises a processor for detecting if UEs are nearby and if none are it controls the base station to enter sleep mode during which it transmits its reference signal and system information less frequently. The base station is woken up in response to a wake-up command received from a network node or from a UE via the core network. This command can take a number of forms, but in all cases is received and decoded by an active network node whereupon a command is sent to the base station to wake up.

EP2355594 discloses a small cell base station with a ready, sniffing and sleep state. In the sniffing state the radio transceiver and processing hardware is switched off and is replaced by a low power sniffer which detects power in the uplink frequency band of the macro cell. Thus, when user equipment in the vicinity of the small cell base station make a call to the macro cell the sniffer detects a rise in the noise power level and transmits a wake up signal.

### SUMMARY

A first aspect of the present invention provides a transceiver as claimed in Claim 1.

The present invention recognises that allowing a network node to enter an inactive state in order to save power for example, means that much of its circuitry that is required for detecting a nearby user equipment will be inactive. It also recognises that user equipment transmitting signals to the network node requesting a connection will transmit them on a predetermined time frequency resource that is dedicated for these signals and will also repeat the connection request a number of times if no response is received. Thus, it addresses the problems of a network node in an inactive state being unable to detect a user equipment requiring a connection by providing a transceiver which is operable to simply monitor the time frequency resource used by user equipment requesting a connection, perhaps when entering the cell or when waking up, and in response to detecting a signal on this time frequency resource to transmit a control signal to the network node indicating it should transition to active mode. This allows the network node to detect a repeat transmission of the connection request and to respond to it.

It should be noted that a connection request may take a number of forms and may be a node selection signal indicating that the user equipment is interested in connecting to the base station. In some embodiments, it comprises a preamble providing information regarding the user equipment and allowing the network node to generate a response to match the preamble.

Although the signal detected within the time frequency resource may be a connection request from a user equipment, the network node may be able to detect other signals transmitted within the monitored resource, perhaps signals sent by another network node, aware of a user equipment located close to the dormant network node, and wishing to transition the network node to an active mode.

A transceiver that is simply operable to detect a signal on a predetermined time frequency resource and transmit a transition control signal can be configured as a very simple device with very low power consumption and as such providing this as an active device while the far more complex network node is inactive generates significant power savings. Furthermore, configuring the transceiver to detect signals that are transmitted by conventional user equipment allows this system to operate with legacy user equipment and with user equipment operating according to a standard such as the LTE standard.

The transceiver may be a standalone unit that can be attached to, or placed in proximity, to a network node and can control the transition of that network node. Alternatively, in some embodiments it may form a portion of the network node circuitry, other portions of the network node circuitry entering an inactive state while the transceiver portion of the circuitry remains in an active state.

The network node may be a small cell network node supporting a small cell which may be within a larger macro cell and it may be an energy sustaining small cell base station that is not connected to an external power supply but is powered by an energy sustaining source such as a solar cell or wind power perhaps in conjunction with some energy storage means such as a battery. Furthermore, the inactive state of the network node is one where all or most of its circuitry is powered down and thus, it consumes little or no power and cannot detect or decode signals or transmit or broadcast signals. When in an active state its circuitry is powered up and it can detect and decode signals received from user equipment and can broadcast pilot signals including cell selection and synchronisation signals required by user equipment when determining which cell to connect to.

Although the monitoring circuit may detect the user equipment signal in a number of ways, in some embodiments, said monitoring circuitry is operable to detect said user equipment signal by detecting an increase in energy levels within said predetermined time frequency resource.

As the transceiver is a low complexity, low power device then in some cases the monitoring circuitry simply detects increases in energy levels within the predetermined time frequency resource that it is monitoring. Such increases in energy level indicate signals being transmitted within that resource and are therefore an indication that a user equipment may be transmitting a connection request and thus, the transceiver can respond to this by transmitting a transmission control signal to the network node indicating it should enter active mode. In this regard although connection requests will be detected other signals transmitted on this resource will also cause an increase in energy levels and as such will also be detected. Thus, where another network node wishes to wake up the sleeping network node it may transmit a signal on this resource, which signal will be detected by the transceiver and a transition control signal to wake up the network node will be issued.

In other embodiments, said monitoring circuitry is operable to detect said user equipment signal by comparing a monitored signal with a predetermined user equipment connection request signal, said user equipment signal being detected when said comparison indicates a predetermined similarity in said signals.

Although the detection of an increase in energy levels is a simple way of detecting signals on this resource, the transceiver may also detect other signals that are present as noise and there may therefore be some false positives. In some cases, it may be advantageous to provide some sort of decoding or partial decoding of the signals, perhaps by comparing them with predetermined signals and where there are certain similarities in the pattern, then it is determined that the signal detected is a connection request and a transition control signal can be transmitted.

The transceiver comprises an input operable to receive configuration information for said network node, said configuration information including said predetermined time frequency resource used for transmission of user equipment connection request signals.

The transceiver is configured to control the transition of the network control node and as such, in some embodiments it comprises an input operable to receive configuration information for that network node. This input may receive the configuration information in the form of a wireless signal transmitted from the network node itself or from a network control node, or it may be a hardwired input from the network node to which it is connected, or it may be an input for a user to input the configuration information. In the latter case, the transceiver may, for example, have an analogue filter for filtering signals such that the predetermined time frequency resource is monitored and the user may adjust the capacitance and/or inductance impedance of the filter to tune it to a different frequency band in dependence upon the configuration information of the network node whose transitions it is controlling.

The configuration information further comprises pilot signal information for said network node.

The network node is configured to transmit pilot signals which provide synchronisation information and signal strength information to user equipment in the vicinity allowing them to select the network node as a network node suitable for connection to and to determine the time frequency resources that are suitable for transmission of connection request signals during a RACH procedure for example. When in inactive mode, the network node will not transmit these signals and thus, a user equipment will not detect the network node. The transceiver will itself emulate at least one of these signals and transmit it itself allowing a user equipment to detect the network node and determine whether it wishes to connect to it or not.

In this regard, many of the signals that are broadcast by the network node may be broadcast by another network node, for example, a macro network node which covers the area of this network node and which does not enter sleep mode or inactive mode. However, where the macro network node transmits the signals, although the synchronisation information and other information can be received by the user equipment, determination of signal strength of the network node and therefore the user equipment proximity to it cannot be derived if the macrocell is transmitting the signals. In this regard, if at least one of the signals is transmitted by the transceiver, then the user equipment will be able to determine the signal strength from this network node.

In some embodiments the at least one signal may be the common reference signal in LTE. In other embodiments the transceiver may broadcast all of the cell selection and synchronisation signals required by the user equipment to determine that it wishes to connect to the network node and to transmit a connection request.

In some embodiments, said transceiver is configured to enter an inactive state following transmission of said transition control signal to said network node.

The transceiver is generally configured to provide some of the essential services of the network node when it is in an inactive state. Thus, when it is no longer in an inactive state, the transceiver may itself enter an inactive state as it is no longer required. In some embodiments where the transceiver does enter an inactive state when the network node is in active state, prior to entering the inactive state the network node will transmit a transition control signal to the transceiver indicating that the transceiver should enter an active state.

A second aspect of the present invention provides a network node comprising a transceiver according to a first aspect of the present invention, said network node being configured to transition to said active state in response to said transition control signal received from said transceiver, said network node further comprising: monitoring circuitry configured to monitor said predetermined time frequency resource; and signal generation and transmission circuitry operable in response to receipt of a connection request signal from a user equipment to generate and transmit a response to said user equipment.

The network node that is controlled by the transceiver will on waking up monitor the predetermined time frequency resource for user equipment connection requests and on detecting one will respond to it. In this regard, the transceiver will in most cases have transmitted its transition control signal in response to detection of a user equipment connection request. User equipment is generally configured to repeatedly send these requests until it receives an acknowledgement or times out and thus, the network node will detect and can respond to one of these repeat transmissions having entered active mode.

In some alternative embodiments, the transceiver is configured to transmit the user equipment connection request that it received in addition to the wake-up request and in such a case the network node can respond to this request and does not need to receive a repeat transmission.

A third aspect of the present invention provides a method according to Claim 6.

A fourth aspect of the present invention provides a computer program operable when executed on a computer to perform method according to the third aspect of the present invention.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments will now be described further, with reference to the accompanying drawings, in which:
Figure 1 illustrates an ultra-low power transceiver according to an embodiment;
Figure 2 illustrates a small cell network node according to an embodiment;
Figure 3 illustrates signals sent between a user equipment, ULPT and small cell network node according to an embodiment;
Figure 4 illustrates a sleep-mode capable base station according to an embodiment;
Figure 5 illustrates steps in a method according to an embodiment;
Figure 6 illustrates initial cell search and selection steps performed by a UE; and
Figure 7 illustrates the selection of the cell by the UE.

### DESCRIPTION OF THE EMBODIMENTS

Before discussing the embodiments in any more detail, first an overview will be provided.

An ultra low powered transceiver (ULPT) is proposed that can emulate, on behalf of a dormant cell, the signals required to perform at least some of or the entire cell selection and initiate the random access procedure - to this end, a low-complexity ULPT solution which is characterized by a substantially low power usage for such emulation purposes compared to the woken-up cell, mainly thanks to the fact that it does not rely on energy-intensive signal processing.

In this regard, the user equipment (UE) is allowed to transparently select the most desirable serving cell out of multiple neighboring cells by using standardized measurements of the common reference signals, which are transmitted by woken up cells, a covering macro cell or the proposed ULPT - in this regard the system is standard-compliant and no UE modifications are required.

The user equipment (UE) initiates the random access procedure to the determined best-serving cell having the strongest pilot signal by sending a random access preamble over the random access channel (RACH) in accordance with the system information block 2 as broadcasted by the ULPT over the physical downlink shared channel (PDSCH).

The ULPT wakes up the dormant base station of the best-serving cell upon receiving the RACH preamble in the dedicated resources which are indicated by SIB2 (system information block).

The woken-up best-serving base stations continue with the random access procedure by processing a subsequent retransmission of the RACH preamble (the UE is configured to send RACH preambles periodically until time out or cell reply). At this stage, the woken-up cell assumes normal functionality and the ULPT becomes inactive until the next sleep mode cycle.

Advantages of such a technique are that it does not require any overlay macro-cell or small cell for optimum cell selection of dormant cells. It is fully compliant with the legacy equipment and in particular with the LTE standard. In some embodiments, the ULPT can be active at the same time as the cell is supports and can perform the cell selection tasks in the background, while the awake femto-cell performs data communication.

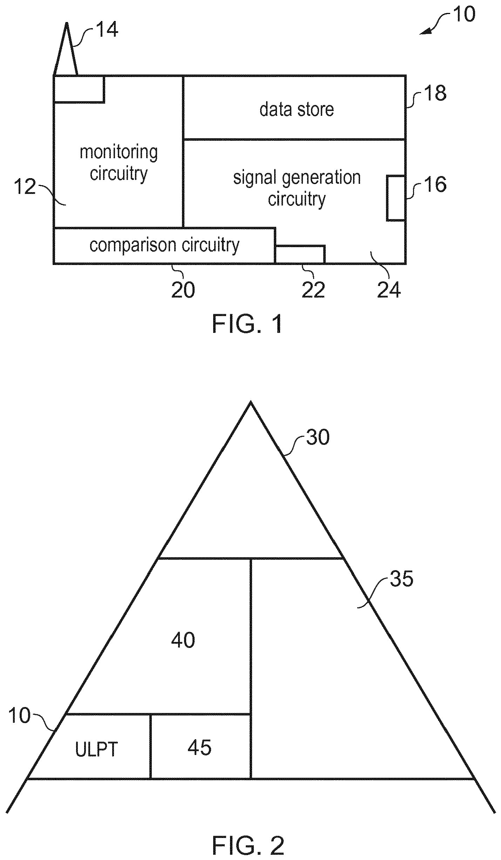

Figure 1 illustrates an ultra-low power transceiver according to an embodiment. The transceiver 10 is configured to control the transitions between active and inactive state of a base station and comprises monitoring circuitry 12 configured to monitor signals received via antenna 14. The monitoring circuitry 12 is configured to monitor signals within a predetermined time frequency resource. Configuration of the monitoring circuitry can be dynamic and done in response to an input received at input 16. Input 16 receives configuration information relevant to the base station that the transceiver sends control signals to. This information includes the time frequency resource in which the user equipment transmits connection requests to this base station and also contains other information regarding the base station, which may be a small cell base station, such as pilot signal information including synchronisation signals and cell selection signals that the base station broadcasts when in active mode.

The transceiver 10 comprises a data store 18 for storing the configuration information and comparison circuitry 20 which compares signals detected by monitoring circuitry 12 with predetermined signals stored in data store 18 and representative of user equipment connection requests. If there is a sufficient match of the signals then it is determined that a user equipment connection request has been detected and a transition control or wake-up signal is generated and output via output 22. This wake-up signal is transmitted to the network node or small cell base station and causes it to transition from an inactive to an active state.

In this embodiment, transceiver 10 also comprises signal generation circuitry 24 which generates a common reference signal using information received at the input 16 regarding the configuration of the base station. This common reference signal is broadcast by antenna 14 and emulates the common reference signal broadcast by the base station when in active mode. In this way, a user equipment in the vicinity of the base station will detect the common reference signal that is broadcast by the transceiver even though the base station itself is in inactive mode. The user equipment can determine from this signal whether connection to the small cell base station would be advantageous.

Figure 2 shows a small cell base station according to an embodiment. Small cell base station 30 comprises signal generation circuitry 35 for generating signals to be broadcast. These are pilot signals including synchronisation signals and cell selection signals. Thus, when in active mode, the small cell will broadcast a primary synchronisation signal (PSS), a secondary synchronisation signal (SSS), a common reference signal (CRS), a channel state information reference signal (CSI-RS) and a primary broadcast signal (PBCH). It will also broadcast a PCFICH signal which is a physical control format indicator channel and a PDCCH physical downlink control channel signal. A PDSCH for physical downlink shared channel will also be transmitted which will contain the system information blocks which contain information such as the time frequency resource that the user equipment should use for transmitting connection request signals during the random access procedure. These are standardised LTE synchronisation and acquisition signals and in this way, the network node provides sufficient information for the user equipment to determine whether it wishes to connect to the network node and to initiate a request for the connection procedure.

Small cell base station 30 also comprises decoding circuitry 40 which is operable to decode signals received at the small cell base station and control circuitry 45 which responds to the decoded signals and instructs the signal generation circuitry 35 to generate signals to transmit in response to received signals such as connection requests from user equipment.

The small cell base station is configured to operate in one of two modes, an active mode where it is broadcasting the pilot signals and receiving, decoding and responding to user equipment communications and an inactive mode where much or all of this circuitry is powered down. Thus, in inactive mode the small cell base station 30 does not detect user equipment requests, nor does it broadcast pilot signals.

In this embodiment, there is an ultra-low powered transceiver ULPT 10 such as is shown in Figure 1 within the small cell base station 30. In other embodiments it may be a separate unit located close to and in data communication with the small cell base station.

The ultra-low power transceiver (ULPT) 10 is configured to control the transition of the small cell base station 30 from inactive to active mode. Thus, when it is determined that there are no user equipment in the vicinity, the small cell base station may transition to inactive mode and when doing so will control the ULPT 10 to transition to active mode. In active mode the ULPT will broadcast a common reference signal as a pilot signal. Other synchronisation signals will in this embodiment be broadcast by the covering macro cell and in this way although the small cell base station is largely inactive, the user equipment will be able to determine information such as the time frequency resource to be used for connection requests to the small cell base station from information transmitted by the macrocell, while the actual strength of the signal transmitted by the small cell base station, can be determined from the common reference signal transmitted by transceiver 10.

If having received these signals a user equipment in the vicinity determines that it wishes to connect to the small cell base station, then it will transmit a connection request to that small cell base station and the monitoring circuitry 12 within transceiver 10 will detect this signal and will transmit a transition control signal to the small cell base station 30 which will power up its circuitry and cause it to enter active mode. Once in active mode the small cell base station will receive a subsequent transmission of the connection request by the user equipment and will decode and respond to it. In this way, the user equipment will be able to connect to the small cell base station even though when its initial request was transmitted, the small cell base station was in inactive mode.

Once the transceiver 10 has woken up the small cell base station it will itself enter low power mode.

In some cases, the signal that is detected by transceiver 10 within the time frequency resources reserved for user equipment connection requests will in fact be a signal transmitted by the macrocell network node which has determined that there is a user equipment that would be better served by the small cell base station than by itself. In this regard, it is aware that the transceiver is monitoring the time frequency resource set aside for the user equipment connection request and thus, it transmits a signal in this time frequency resource. On waking up, the base station will broadcast its synchronisation and pilot signals and thus, the user equipment can then choose to connect to this small cell base station.

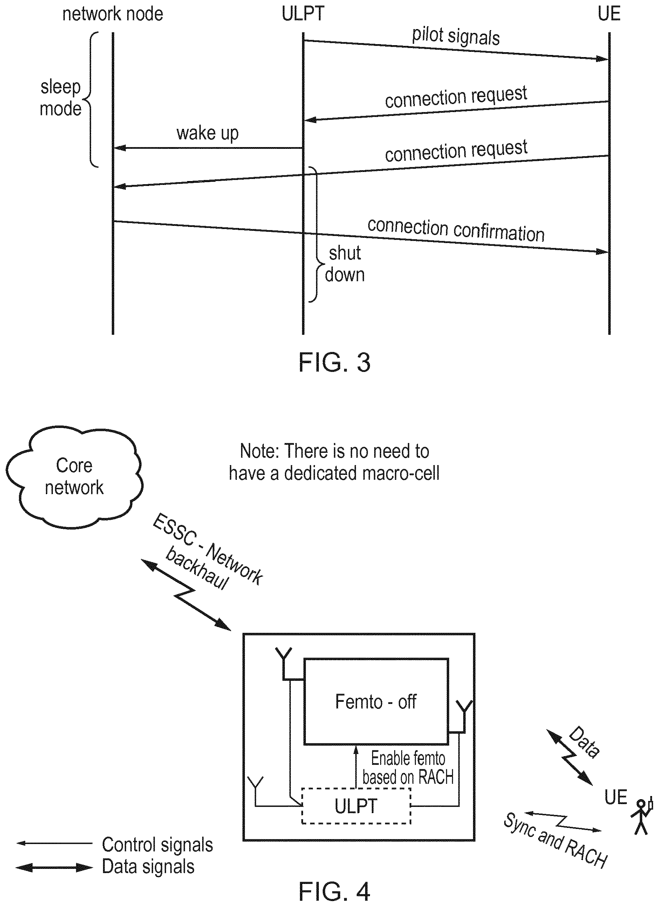

Figure 3 shows signals transmitted between a user equipment, ULPT and small cell network node according to an embodiment. In this embodiment the network node is initially in sleep mode and pilot signals that emulate those usually transmitted by the network node are broadcast by the ULPT. A UE in the vicinity responds to receipt of the pilot signals by transmitting a connection request indicating it would like to connect to the network node. This is received by the ULPT which cannot itself process the request but which is monitoring the time frequency resource reserved for requests to the sleeping small cell network node, and in response to detecting a signal in this time frequency resource, it transmits a wake up signal to the network node, which powers on its processing circuitry. The ULPT can then shut down and the network node which is now operational will, in response to receipt of a subsequent connection request from the UE, which is configured to send requests repeatedly until it receives a response or times out, transmit an acknowledgement in the form of a connection confirmation response, whereupon the random access connection process between the UE and the network node can proceed.

Although in the embodiments of Figure 1 and 2, the ULPT only broadcasts one of the pilot signals in the form of the common reference signal, in other embodiments, such as that shown in Figure 4, the UPLT broadcasts signals for cell identification and selection in accordance with the LTE standard the PSS/SSS/CRS transmissions.

In the embodiment of Figure 4 the UPLT broadcasts four more signals on behalf of a dormant cell in order to allow a nearby user to engage in the LTE cell-attachment process over the random-access channel (RACH).

In particular, the ULPT broadcasts
- the physical broadcast channel (PBCH) message to announce the primary master information block (MIB) info required for the RACH procedure,
- the physical control format indicator channel (PCFICH) message to let the user determine how long is the physical downlink control channel (PDCCH) space,
- an SI-RNTI scrambled PDCCH carrying the grant to the physical downlink shared channel (PDSCH) data space,
- a PDSCH message with the secondary system information blocks SIB1 and SIB2.

The above PBCH, PCFICH, and PDSCH messages are standardized to be transmitted in the form of periodically varying versions, whose format can be pre-computed and stored in a memory, as set out in the LTE standard {"Physical channels and modulation," 3GPP Technical Specification Group Radio Access Network, Evolved Universal Terrestrial Radio Access (E-UTRA), Tech. Rep. TS 36.211 V11.5.0, Mar. 2013. [Online]}.

To avoid energy-intensive signal processing, the ULPT broadcasts the said four channels by modulating the pre-computed and pre-stored static data sequences directly onto the corresponding subcarriers.

This processing-less passive broadcast by the ULPT enables the UE to
- identify the strongest neighboring cell that is available for service,
- initiate the random access procedure by sending a RACH preamble over time-frequency resources specified by SIB2 to establish a communication link with the desired cell.

The UE is configured by a suitable SIB2 format to send the RACH preambles periodically for a minimum time-interval over specific time-frequency resources. Upon the reception of the (first) RACH preamble from the UE in the SIB2-preconfigured RACH resources, the ULPT wakes up the dormant small cell. The woken-up cell takes over the complex random access procedure from the ULPT and replies to any subsequently received and decoded RACH preamble from the UE.

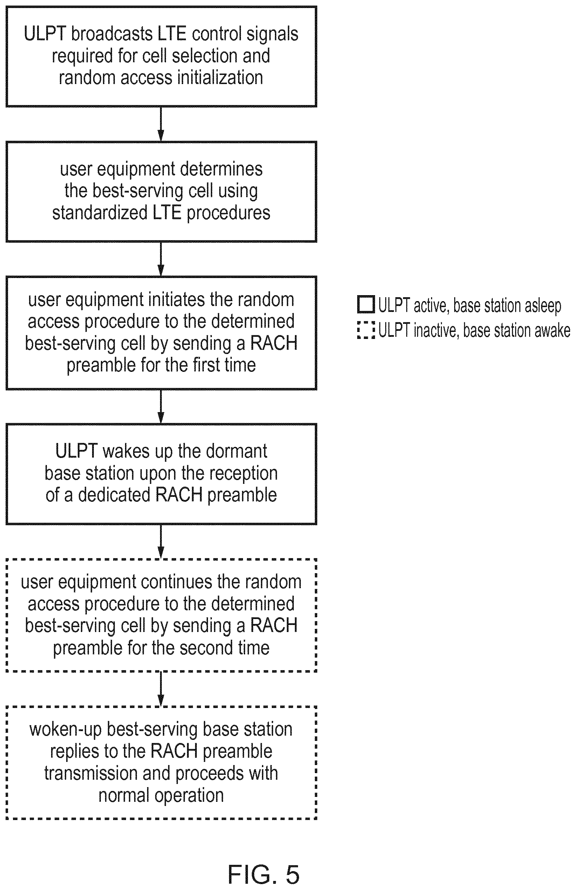

Practically, the ULPT can detect the transmission of a UE preamble by sniffer-like monitoring of the energy level in the SIB2-specified resources, or more accurately, decoding the signal in the SIB2-specified resources to verify that a permissible preamble for a pre-defined set has been sent by the UE. The above procedure is schematically illustrated in the flow chart of figure 5.

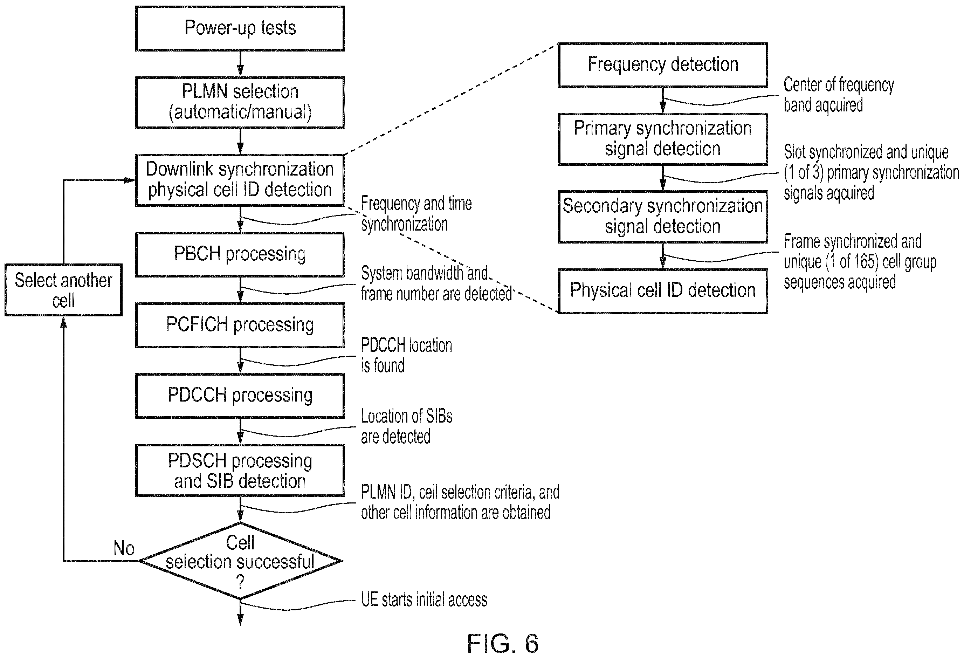

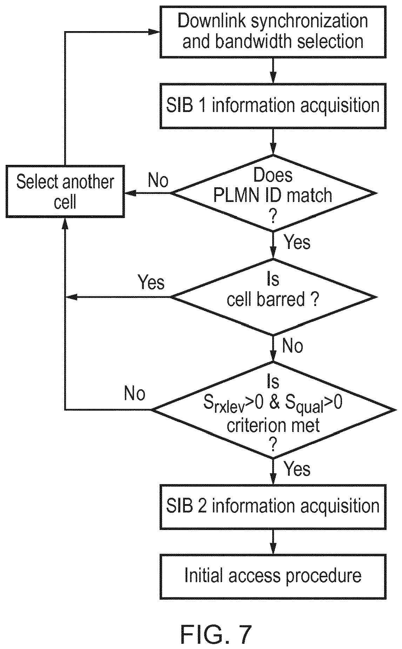

Figure 6 show steps performed at the UE in its initial cell search and selection and Figure 7 shows the steps performed during cell selection leading to an initial access procedure which is where the UE transmits a preamble on the time frequency resource indicated in the SIB2. These are steps performed according to the LTE standard and are compatible with the present invention.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A transceiver (10) for controlling a network node (30) to transition between an active state and an inactive state, said transceiver comprising:
monitoring circuitry (12) operable to monitor a predetermined time frequency resource for transmitting connection request signals from user equipment to said network node;
output circuitry operable in response to said monitoring circuitry detecting a signal within said predetermined time frequency resource to transmit a transition control signal to said network node;
an input (16) operable to receive configuration information for said network node, said configuration information including said predetermined time frequency resource used for transmission of user equipment connection request signals;
wherein said configuration information further comprises pilot signal information for said network node;
said transceiver further comprising a signal generator (24) for generating when said network node is in an inactive state at least one signal emulating at least one signal broadcast by said network node when in an active state, and a transmitter for transmitting said at least one signal.

2. A transceiver according to claim 1, wherein said monitoring circuitry (12) is operable to detect said user equipment signal by detecting an increase in energy levels within said predetermined time frequency resource.

3. A transceiver according to any preceding claim, wherein said monitoring circuitry (12) is operable to detect said user equipment signal by comparing a monitored signal with a predetermined user equipment connection request signal, said user equipment signal being detected when said comparison indicates a predetermined similarity in said signals.

4. A transceiver according to any preceding claim, said transceiver being configured to enter an inactive state following transmission of said transition control signal to said network node.

5. A network node (30) comprising a transceiver (10) according to any preceding claim, said network node being configured to transition to said active state in response to said transition control signal received from said transceiver, said network node further comprising:
monitoring circuitry configured to monitor said predetermined time frequency resource; and
signal generation and transmission circuitry (35) operable in response to receipt of a connection request signal from a user equipment to generate and transmit a response to said user equipment.

6. A method of controlling a network node to transition between an inactive state and an active state said method comprising:
an initial step of receiving configuration information for said network node, said configuration information including a predetermined time frequency resource dedicated for transmission of user equipment connection request signals;
wherein said configuration information further comprises pilot signal information for said network node;
said method further comprising generating when said network node is in an inactive state, at least one signal emulating at least one signal broadcast by said network node when in an active state; and
broadcasting said at least one signal
monitoring the predetermined time frequency resource dedicated for transmitting connection request signals from user equipment to said network node;
in response to detecting a signal on said time frequency resource transmitting a transition control signal to said network node.

7. A method according to claim 6, wherein said step of detecting said signal comprises detecting an increase in energy levels within said predetermined time frequency resource.

8. A method according to claim 6 or 7, wherein said step of detecting comprises comparing a monitored signal with a predetermined user equipment connection request signal and in response to said comparison indicating a predefined similarity in said signals transmitting said transition control signal.

9. A method according to any one of claims 6 to 8, said method further comprising entering an inactive state following transmission of said transition control signal to said network node.

10. A method according to any one of claims 6 to 9, further comprising said network node receiving said transition control signal from said transceiver and monitoring said predetermined time frequency resource; and
in response to receipt of a connection request signal from a user equipment transmitting a response to said user equipment.

11. A computer program operable when executed on a computer to perform the method according to any one of claims 6 to 10.

## Patentansprüche

1. Transceiver (10) zum Steuern eines Netzwerkknotens (30) zum Umstellen zwischen einem aktiven Zustand und einem inaktiven Zustand, wobei besagter Transceiver umfasst:
eine Überwachungsschaltung (12), betreibbar zum Überwachen einer vorbestimmten Zeitfrequenzressource zum Übertragen von Verbindungsanforderungssignalen vom Teilnehmergerät zu besagtem Netzwerkknoten;
eine Ausgangsschaltung, betreibbar als Antwort auf besagte Überwachungsschaltung beim Erkennen innerhalb besagter vorbestimmter Zeitfrequenzressource zum Übertragen eines Umstellungssteuersignals auf besagten Netzwerkknoten;
einen Eingang (16), betreibbar zum Empfangen von Konfigurationsinformation für besagten Netzwerkknoten, wobei besagte Konfigurationsinformation besagte vorbestimmte Zeitfrequenzressource einschließt, die verwendet wird für das Übertragen von Teilnehmergerät-Verbindungsforderungssignalen;
wobei besagte Konfigurationsinformation weiterhin umfasst Pilotsignalinformation für besagten Netzwerkknoten;
wobei besagter Transceiver weiterhin umfasst einen Signalgenerator (24) zum Erzeugen mindestens eines Signals, wenn besagter Netzwerkknoten sich in einem inaktiven Zustand befindet, das mindestens ein Signal emuliert, welches von besagtem Netzwerkknoten gesendet wurde, als er sich in einem aktiven Zustand befand, und einen Sender zum Übertragen besagten mindestens einen Signals.

2. Transceiver nach Anspruch 1, wobei besagte Überwachungsschaltung (12) betreibbar ist zum Erkennen besagten Teilnehmergerätsignals durch Erkennen eines Ansteigens der Energieniveaus innerhalb besagter vorbestimmter Zeitfrequenzressource.

3. Transceiver nach einem beliebigen der vorhergehenden Ansprüche, wobei besagte Überwachungsschaltung (12) betreibbar ist zum Erkennen besagten Teilnehmergerätsignals durch Vergleichen eines überwachten Signals mittels eines vorbestimmten Teilnehmergerät-Verbindungsanforderungssignals, wobei besagtes Teilnehmergerätsignal erkannt wird, wenn besagter Vergleich eine vorbestimmte Ähnlichkeit in besagten Signalen anzeigt.

4. Transceiver nach einem beliebigen der vorhergehenden Ansprüche, wobei besagter Transceiver konfiguriert ist zum Eingehen in einen inaktiven Zustand nach der Übertragung besagten Umstellungssteuersignals auf besagten Netzwerkknoten.

5. Netzwerkknoten (30), umfassend einen Transceiver (10) nach einem beliebigen der vorhergehenden Ansprüche, wobei besagter Netzwerkknoten konfiguriert ist zum Umstellen auf besagten aktiven Zustand als Antwort auf besagtes Umstellungssteuersignal, das von besagtem Transceiver empfangen wurde, wobei besagter Netzwerkknoten weiterhin umfasst:
eine Überwachungsschaltung, konfiguriert zum Überwachen besagter vorbestimmter Zeitfrequenzressource; und
eine Signalerzeugung und Übertragungsschaltung (35), betreibbar, als Antwort auf das Empfangen eines Verbindungsanforderungssignals von einem Teilnehmergerät, zum Erzeugen und Übertragen einer Antwort an besagtes Teilnehmergerät.

6. Verfahren zum Steuern eines Netzwerkknotens zum Umstellen zwischen einem inaktiven Zustand und einem aktiven Zustand, wobei besagtes Verfahren umfasst:
einen Startschritt des Empfangens von Konfigurationsinformation für besagten Netzwerkknoten, wobei besagte Konfigurationsinformation eine vorbestimmte Zeitfrequenzressource einschließt, welche dediziert ist für das Übertragen von Teilnehmergerät-Verbindungsanforderungssignalen;
wobei besagte Konfigurationsinformation weiterhin umfasst Pilotsignalinformation für besagten Netzwerkknoten;
wobei besagtes Verfahren weiterhin umfasst das Erzeugen mindestens eines Signals, wenn besagter Netzwerkknoten sich in einem inaktiven Zustand befindet, das mindestens ein Signal emuliert, welches von besagtem Netzwerkknoten gesendet wurde, als er sich in einem aktiven Zustand befand; und
Senden besagten mindestens einen Signals Überwachen der vorbestimmten Zeitfrequenzressource, die dediziert ist zum Übertragen von Verbindungsanforderungssignalen vom Teilnehmergerät zu besagtem Netzwerkknoten;
als Antwort auf das Erkennen eines Signals an besagter Zeitfrequenzressource, Übertragen eines Umstellungssteuersignals auf besagten Netzwerkknoten.

7. Verfahren nach Anspruch 6, wobei besagter Schritt des Erkennens besagten Signals umfasst das Erkennen eines Anstiegs der Energieniveaus innerhalb besagter vorbestimmter Zeitfrequenzressource.

8. Verfahren nach Anspruch 6 oder 7, wobei besagter Schritt des Erkennens umfasst ein Vergleichen eines überwachten Signals mit einem bestimmten Teilnehmergerät-Verbindungsanforderungssignal und, als Antwort auf besagtes Vergleichen, das eine vordefinierte Ähnlichkeit in besagten Signalen anzeigt, Übertragen besagten Umstellungssteuersignals.

9. Verfahren nach einem beliebigen der vorhergehenden Ansprüche 6 bis 8, wobei besagtes Verfahren weiterhin umfasst das Eingehen in einen inaktiven Zustand nach der Übertragung besagten Umstellungssteuersignals auf besagten Netzwerkknoten.

10. Verfahren nach einem beliebigen der Ansprüche 6 bis 9, weiterhin umfassend besagten Netzwerkknoten, der besagtes Umstellungssteuersignal von besagtem Transceiver empfängt, und Überwachen besagter vorbestimmter Zeitfrequenzressource; und,
als Antwort auf das Empfangen eines Verbindungsanforderungssignals von einem Teilnehmergerät, Übertragen einer Antwort an besagtes Teilnehmergerät.

11. Computerprogramm, betreibbar zum Durchführen des Verfahrens nach einem beliebigen der Ansprüche 6 bis 10, wenn es auf einem Computer ausgeführt wird.

## Revendications

1. Émetteur/récepteur (10) pour commander un noeud de réseau (30) pour passer d'un état actif à un état inactif, ledit émetteur/récepteur comprenant :
un ensemble de circuits de surveillance (12) permettant de surveiller une ressource temps-fréquence prédéterminée pour transmettre des signaux de demande de connexion à partir de l'équipement utilisateur vers ledit noeud de réseau ;
un ensemble de circuits de sortie permettant, en réponse à la détection par ledit ensemble de circuits de surveillance d'un signal dans ladite ressource temps-fréquence prédéterminée, de transmettre un signal de commande de transition audit noeud de réseau ;
une entrée (16) permettant de recevoir des informations de configuration pour ledit noeud de réseau, lesdites informations de configuration comprenant ladite ressource temps-fréquence prédéterminée utilisée pour la transmission de signaux de demande de connexion d'équipement utilisateur ;
lesdites informations de configuration comprenant en outre des informations de signal pilote pour ledit noeud de réseau ;
ledit émetteur/récepteur comprenant en outre un générateur de signal (24) pour générer, lorsque ledit noeud de réseau est dans un état inactif, au moins un signal émulant au moins un signal diffusé par ledit noeud de réseau lorsqu'il est dans un état actif, et un émetteur pour émettre ledit au moins un signal.

2. Émetteur/récepteur selon la revendication 1, dans lequel ledit ensemble de circuits de surveillance (12) permet de détecter ledit signal d'équipement utilisateur en détectant une augmentation des niveaux d'énergie dans ladite ressource temps-fréquence prédéterminée.

3. Émetteur/récepteur selon l'une quelconque des revendications précédentes, dans lequel ledit ensemble de circuits de surveillance (12) permet de détecter ledit signal d'équipement utilisateur en comparant un signal surveillé à un signal de demande de connexion d'équipement utilisateur prédéterminé, ledit signal d'équipement utilisateur étant détecté lorsque ladite comparaison indique une similarité prédéterminée dans lesdits signaux.

4. Émetteur/récepteur selon l'une quelconque des revendications précédentes, ledit émetteur/récepteur étant configuré pour passer en état inactif suite à la transmission dudit signal de commande de transition audit noeud de réseau.

5. Noeud de réseau (30) comprenant un émetteur/récepteur (10) selon l'une quelconque des revendications précédentes, ledit noeud de réseau étant configuré pour passer audit état actif en réponse audit signal de commande de transition provenant dudit émetteur/récepteur, ledit noeud de réseau comprenant en outre :
un ensemble de circuits de surveillance configuré pour surveiller ladite ressource temps-fréquence prédéterminée ; et
un ensemble de circuits de génération et de transmission de signal (35) permettant, en réponse à la réception d'un signal de demande de connexion à partir d'un équipement utilisateur, de générer une réponse et de la transmettre audit équipement utilisateur.

6. Procédé de commande d'un noeud de réseau pour passer d'un état inactif à un état actif, ledit procédé comprenant :
une étape initiale de réception d'informations de configuration pour ledit noeud de réseau, lesdites informations de configuration comprenant une ressource temps-fréquence prédéterminée dédiée à la transmission de signaux de demande de connexion d'équipement utilisateur ;
lesdites informations de configuration comprenant en outre des informations de signal pilote pour ledit noeud de réseau ;
ledit procédé comprenant en outre la génération, lorsque ledit noeud de réseau est en état inactif, d'au moins un signal émulant au moins un signal diffusé par ledit noeud de réseau lorsqu'il est en mode actif ; et
diffuser ledit au moins un signal
surveiller la ressource temps-fréquence prédéterminée dédiée pour transmettre des signaux de demande de connexion à partir de l'équipement utilisateur vers ledit noeud de réseau ;
en réponse à la détection d'un signal sur ladite ressource temps-fréquence, transmettre un signal de commande de transition audit noeud de réseau.

7. Procédé selon la revendication 6, dans lequel ladite étape de détection dudit signal comprend la détection d'une augmentation des niveaux d'énergie dans ladite ressource temps-fréquence prédéterminée.

8. Procédé selon la revendication 6 ou 7, dans lequel ladite étape de détection comprend la comparaison d'un signal surveillé avec un signal de demande de connexion d'équipement utilisateur prédéterminé et, en réponse à ladite comparaison, l'indication d'une similarité prédéfinie dans lesdits signaux transmettant ledit signal de commande de transition.

9. Procédé selon l'une quelconque des revendications 6 à 8, ledit procédé comprenant en outre le passage dans un état inactif suite à la transmission dudit signal de commande de transition audit noeud de réseau.

10. Procédé selon l'une quelconque des revendications 6 à 9, comprenant en outre la réception par ledit noeud de réseau dudit signal de commande de transition à partir dudit émetteur/récepteur et la surveillance de ladite ressource temps-fréquence prédéterminée ; et
en réponse à la réception d'un signal de demande de connexion à partir d'un équipement utilisateur, la transmission d'une réponse audit équipement utilisateur.

11. Programme informatique permettant, lorsqu'il est exécuté sur un ordinateur, d'exécuter le procédé selon l'une quelconque des revendications 6 à 10.
